# EUROPÄISCHE PATENTANMELDUNG

(11) **EP 1 616 651 A1**
(43) Veröffentlichungstag der Anmeldung: **18.01.2006**
(21) Anmeldenummer: 04016892.4
(22) Anmeldetag: 16.07.2004
(51) Int. Cl.: B23D 65/00, B23D 61/14

(54) **Ausgangskomponente für die Herstellung von Sägeblättern oder Sägebändern und Verfahren zu dessen Herstellung**

(71) Anmelder: BÖHLER-UDDEHOLM Precision Strip GmbH & Co KG, 3333 Böhlerwerk (AT)
(72) Erfinder: Ahorner, Leander Ing., 3340 Waidhofen/Ybbs (AT); Innitzer, Gregor Dipl.-Ing., 1030 Wien (AT); Ponemayr, Helmut Dipl.-Ing., 3365 Allhartsberg (AT)
(74) Vertreter: Hess, Peter K. G.

(57) **Zusammenfassung**

Die vorliegende Erfindung betrifft eine Ausgangskomponente zur Herstellung von Sägeblättern bzw. Sägebändern, ein Verfahren zur Herstellung dieser Ausgangskomponente sowie ein Verfahren zum Herstellen eines Sägeblatts bzw. Sägebands. Die oben genannte Ausgangskomponente umfasst mindestens ein erstes und ein zweites Trägerband (20), vorzugsweise ein Stahlband, und mindestens ein Segment (40) bestehend aus einem Ausgangswerkstoff für eine Schneidkontur von Sägeblättern bzw. Sägebändern, wobei das erste und das zweite Trägerband über das mindestens eine Segment miteinander verbunden sind, um durch Trennen von zumindest des mindestens einen Segments zwei Bimetallbänder zu erzeugen.

## Beschreibung

### 1. Gebiet der Erfindung

Die vorliegende Erfindung betrifft eine Ausgangskomponente zur Herstellung von Sägeblättern bzw. Sägebändern sowie ein Verfahren zu ihrer Herstellung. Des Weiteren betrifft die vorliegende Erfindung ein Verfahren zur Herstellung von Sägeblättern bzw. Sägebändern aus dieser Ausgangskomponente.

### 2. Hintergrund der Erfindung

Als Ausgangskomponente zur Fertigung von Sägen mit harten und verschleißfesten Zahnspitzenbereichen wird im Allgemeinen ein Verbundstahlblatt oder Verbundstahlband eingesetzt. Ausgehend vom Querschnitt des genannten Stahlblattes sind schmale Teile aus Werkzeugstahl auf der Schmalseite bzw. schmalen Stirnseite des elastischen biegbaren Stahlblattes bzw. Trägerbandes befestigt.

Diese Ausgangskomponente ist auch unter der Bezeichnung Bimetallband oder Bimetallblatt basierend auf den verwendeten unterschiedlichen Werkstoffen bekannt. Der Hintergrund der Verwendung von Werkzeugstahl bzw. von anderen Schneidwerkstoffen besteht darin, dass sie für die Zahnspitzenbereiche eine höhere Verschleißfestigkeit und somit eine höhere Lebensdauer des späteren Sägeblattes bereitstellen.

Zur Herstellung des Sägeblattes wird aus dem oben genannten Verbund ein Zahnprofil bzw. eine Zahnkontur ähnlich dem späteren Sägeblattes herausgeschnitten. Die auf diese Weise entstehenden Zähne umfassen Spitzenbereiche bestehend aus Werkzeugstahl, wobei der Rest des Sägeblattes aus dem zähfesten elastischen Stahl des Trägerbandes besteht. Das oben beschriebene Schneiden der Schneidkontur ist jedoch mit einem hohen Verlust an Werkzeugstahl verbunden, da das Material der geschnittenen Zahnzwischenräume keine weitere Verwendung findet.

Daher ist in der EP 1 389 503 A2 die Verwendung eines Trägerbandes in Verbindung mit Segmenten aus Werkzeugstahl beschrieben. Auch diese Anordnung ist noch mit einem hohen Verlust an Werkstoff verbunden, da die Segmente nur begrenzt durch auszuschneidende Zahnkontur auszufüllen sind. Des Weiteren fällt ein hoher Zeitaufwand zum Ausschneiden, Fräsen, Schleifen der Zahnkonturen an, um das abschließende Sägeblatt zu erhalten. Diese aufwendigen Arbeitsschritte führen zudem zu einer Abnutzung der verwendeten Werkzeuge, die ebenfalls kostenintensiv ist.

Es ist daher das technische Problem der vorliegenden Erfindung, eine Ausgangskomponente zur Herstellung von Sägeblättern bzw. Sägebändern sowie ein Verfahren zu ihrer Herstellung bereitzustellen, das mit geringerem Arbeitsaufwand verglichen zum Stand der Technik sowie mit niedrigerem Werkzeugverschleiß bei der Herstellung verbunden ist. Des Weiteren besteht das technische Problem, eine effizientere und kostengünstigere Herstellung von Sägeblättern bzw. Sägebändern bereitzustellen.

### 3. Zusammenfassung der Erfindung

Die vorliegende Erfindung betrifft eine Ausgangskomponente zur Herstellung von Sägeblättern bzw. Sägebändern aufweisend: mindestens ein erstes und ein zweites Trägerband, vorzugsweise ein Stahlband; und mindestens ein Segment bestehend aus einem Ausgangswerkstoff für eine Schneidkontur von Sägeblättern bzw. Sägebändern, wobei das erste und das zweite Trägerband über das mindestens eine Segment miteinander verbunden sind, um durch Trennen von zumindest des mindestens einen Segments zwei Bimetallbänder zu erzeugen.

Gemäß einer bevorzugten Ausführungsform besteht das mindestens eine Segment aus Schnellarbeitsstahldraht (HSS-Draht), Schnellarbeitsstahlblech, Keramik, Cermets, Hartmetall, PKD und/oder geeigneten Schneidwerkstoffen.

Gemäß einer weiteren bevorzugten Ausführungsform variiert die Breite des Schnellarbeitsstahldrahts zwischen der Standardbreite und der doppelten Standardbreite.

Weiterhin bevorzugt erstreckt sich das mindestens eine Segment über die gesamte Länge des ersten und zweiten Trägerbandes oder eine Mehrzahl von Segmenten sind unregelmäßig, in regelmäßigen oder periodischen Abständen entlang des ersten und zweiten Trägerbandes angeordnet.

Zudem ist die Ausgangskomponente mit der Mehrzahl an Segmenten bevorzugt gehärtet.

Gemäß einer weiteren bevorzugten Ausführungsform weisen das erste und das zweite Trägerband jeweils eine erste und eine zweite Stirnseite auf, wobei die erste Stirnseite schmaler ist als die zweite Stirnseite, wobei die ersten Stirnseiten über das mindestens eine Segment miteinander verbunden sind.

In der Ausgangskomponente weist weiterhin bevorzugt das mindestens eine Segment eine krummlinige und/oder eckige Form auf, vorzugsweise rund, viereckig oder oval.

Bevorzugt ist das mindestens eine Segment an der jeweils annähernd geraden ersten Stirnseite des ersten und zweiten Trägerbandes befestigt.

Gemäß einer bevorzugten Ausführungsform ist das mindestens eine Segment in einer Aussparung in der ersten Stirnseite des ersten und/oder zweiten Trägerbandes befestigt, wobei die Aussparung komplementär zu einem Abschnitt des jeweiligen Segments geformt ist.

Weiterhin bevorzugt weist das mindestens eine Segment eine profilierte Querschnittsfläche senkrecht zur Längsachse des ersten und zweiten Trägerbandes auf.

Die vorliegende Erfindung betrifft zudem ein Verfahren zum Herstellen einer Ausgangskomponente zur Herstellung von Sägeblättern bzw. Sägebändern die folgenden Schritte aufweisend: Bereitstellen mindestens eines ersten und eines zweiten Trägerbands, vorzugsweise Stahlbänder; Bereitstellen mindestens eines Segments bestehend aus einem Ausgangswerkstoff für eine Schneidkontur von Sägeblättern bzw. Sägebändern, und Verbinden des ersten und zweiten Trägerbands über das mindestens eine Segment. Das Verbinden erfolgt bevorzugt durch Schweißen, vorzugsweise durch Elektronenstrahl- oder Laserschweißen oder durch Löten.

Als weiteren Schritt umfasst das Verfahren bevorzugt das Vereinzeln einer Mehrzahl von Segmenten aus einem Ausgangsmaterial. Vorzugsweise erfolgt das Vereinzeln durch Stanzen.

Weiterhin bevorzugt ist das Ausgangsmaterial des Segments ein Schnellarbeitsstahl-Kantendraht oder ein Schnellarbeitsstahl-Blech oder ein Schnellarbeitsstahl-Blechband ist.

Weiter bevorzugte Verfahrensschritte sind ein Wärmebehandeln des ersten und zweiten Trägerbandes und des mindestens einen Segments sowie ein Formrichten des ersten und zweiten Trägerbandes und des mindestens einen Segments.

Bevorzugt erfolgt in dem Verfahren ein Härten des ersten und zweiten Trägerbandes und des mindestens einen Segments.

Gemäß einer bevorzugten Ausführungsform umfasst das Verfahren ein Schneiden der Ausgangskomponente, um mindestens zwei Sägeblatt- bzw. Sägebandvorkörper zu erhalten. Vorzugsweise ist dies ein konturnahes Schneiden, wobei vorzugsweise das konturnahe Schneiden der Ausgangskomponente vor dem Härten der Ausgangskomponente erfolgt.

Zudem erfolgt bevorzugt ein Weichglühen und/oder Dressieren des ersten und zweiten Trägerbandes und des mindestens einen Segments.

Ein Verfahren zum Herstellen eines Sägeblatts bzw. Sägebands aus einer Ausgangskomponente umfassend ein erstes und ein zweites Trägerband und mindestens ein verbindendes Segment bestehend aus einem Ausgangswerkstoff für eine Schneidkontur, den folgenden Schritt aufweisend: Schneiden der Ausgangskomponente, vorzugsweise mit einem Schneidlaser, derart, dass zwei Vorkörper für Sägeblätter bzw. Sägebänder entstehen.

In dem obigen Verfahren erfolgt bevorzugt das Schneiden derart, dass nach dem Schneiden an den gegenüberliegenden Seiten des ersten und zweiten Trägerbandes jeweils ein Teil des Segments stehen bleibt, wobei vorzugsweise ein konturnahes Schneiden durchgeführt wird.

Bei dem bevorzugten Schneiden einer Kontur in die Ausgangskomponente wird diese vorzugsweise mit einem Aufmaß zur Fertigbearbeitung geschnitten.

Es ist weiterhin bevorzugt, den Schnitt der Kontur derart anzuordnen, dass das erste und das zweite Trägerband mit mindestens einem verbindendem Segment sich annähernd gegenüberliegende Zahnkonturen oder seitlich versetzte Zahnkonturen aufweist, wobei vorzugsweise die Kontur in das mindestens eine Segment oder in das mindestens eine Segment und das erste und/oder zweite Trägerband geschnitten wird.

Weiterhin bevorzugt erfolgt ein Härten der Ausgangskomponente vor oder nach dem Schneiden und/oder ein Schleifen einer Kontur eines Sägeblatts bzw. eines Sägebands.

Gemäß einer weiteren bevorzugten Ausführungsform umfasst das Verfahren ein Trennen des ersten und oder zweiten Trägerbandes in Längsrichtung, um mindestens zwei Ausgangskomponenten oder mindestens zwei Vorkörper für Sägeblätter bzw. Sägebänder zu erzeugen.

### 4. Kurze Beschreibung der begleitenden Zeichnungen

Die vorliegende Erfindung wird unter Bezugnahme auf die in den begleitenden Zeichnungen dargestellten bevorzugten Ausführungsformen erläutert. Es zeigen:
- Figur 1: eine bevorzugte Ausgangskomponente bestehend aus zwei Trägerbändern, die über ein durchgehendes Segment miteinander verbunden sind;
- Figur 2: eine bevorzugte Ausgangskomponente bestehend aus zwei Trägerbändern, die über eine Mehrzahl von beabstandeten Segmenten miteinander verbunden sind;
- Figur 3: eine bevorzugte Ausgangskomponente bestehend aus zwei Trägerbändern, die über ein durchgehendes Segment miteinander verbunden sind, wobei in der Ausgangskomponente eine konturnahe Schneidlinie verläuft;
- Figur 4: eine bevorzugte Ausführungsform einer Ausgangskomponente bestehend aus zwei Trägerbändern und einem durchgehenden Segment, wobei die konturnahe Schneidlinie sowie die später zu erzielende Zahnkontur dargestellt sind;
- Figur 5: eine vergrößerte Darstellung des mit X gekennzeichneten Bereichs aus Figur 4;
- Figur 6: eine bevorzugte Ausgangskomponente mit einer Mehrzahl von Segmenten, wobei die geplante Zahnkontur angedeutet ist;
- Figur 7: eine vergrößerte Darstellung des mit X gekennzeichneten Bereichs aus Figur 6; und
- Figur 8: eine schematische Darstellung von Zahnkonturen angeordnet in erfindungsgemäß bevorzugten Segmenten unterschiedlicher Form.

### 5. Detaillierte Beschreibung der bevorzugten Ausführungsformen

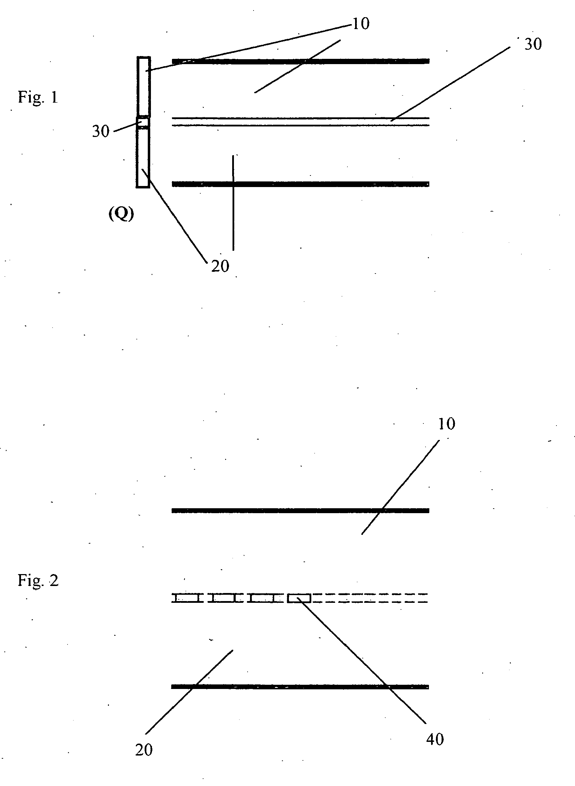

Erfindungsgemäß wird die Ausgangskomponente zur Herstellung von Sägeblättern bzw. Sägebändern aus Trägerbändern und mindestens einem Segment hergestellt. Bevorzugte Ausführungsformen der vorliegenden Erfindung sind schematisch in den Figuren 1 und 2 gezeigt. Sie umfassen ein erstes Trägerband und ein zweites Trägerband 20, die bevorzugt aus zähfestem biegsamem Stahl hergestellt sind. Das erste Trägerband 10 und das zweite Trägerband 20 sind bevorzugt über mindestens ein Segment 30 oder über eine Mehrzahl von Segmenten 40 miteinander verbunden. Sofern ein einzelnes Segment 30 verwendet wird, verläuft dieses einteilig zwischen dem ersten Trägerband 10 und dem zweiten Trägerband 20.

Die erfindungsgemäß bevorzugten Segmente bestehen aus festem und wiederstandsfähigem Material, das nach Beendigung der Herstellung des Sägeblattes die Zahnspitze einer möglichen Zahnkontur eines Sägeblattes bildet. Die bevorzugt eingesetzten Segmente 30, 40 weisen unterschiedliche Formen und Querschnittsprofile auf, die sich in Abhängigkeit von der zu realisierenden Sägenanwendung ergeben. Mit der Gestaltung der Segmentform wird bevorzugt eine effiziente Kraftübertragung zwischen Segment und Trägerband während des Sägens realisiert. Ein bevorzugtes Segmentprofil gewährleistet das Erzeugen einer Verschränkung der Sägezähne, auch wenn die Zähne bzw. Zahnkontur nicht vollständig aus biegsamem Material, wie beispielsweise Keramik oder Hartmetall, besteht. Auf die einzelnen bevorzugten Ausgestaltungen der Segmente 30, 40 wird weiter unten näher eingegangen.

Erfindungsgemäß bevorzugt bestehen das einzelne Segment 30 oder die Mehrzahl von Segmenten 40 aus Schnellarbeitsstahldraht, der auch als HSS-Draht bezeichnet wird. Eine weitere Ausführungsform verwendet Bleche, die aus Schnellarbeitsstahl bestehen. Weitere bevorzugte Materialien für die Segmente 30, 40 sind Hartmetalle, Cermets, d.h. Werkstoffe bestehend aus keramischen und metallischen Phasen, und Poly-Kristalliner Diamant (PKD). Des Weiteren sind sämtliche Werkstoffe zur Herstellung der Segmente 30, 40 geeignet, die die Eigenschaften von Schneidwerkzeugen gewährleisten und die sich dauerhaft mit den Trägerbändern 10, 20 verbinden lassen.

Die in den Figuren 1 und 2 dargestellten erfindungsgemäß bevorzugten Ausgangskomponenten zur Herstellung von Sägeblättern bzw. Sägebändern haben den erfindungsgemäßen Vorteil, dass durch einen Schneidprozess mit geringem Aufwand zwei Bimetallbänder bzw. Bimetallblätter erzeugt werden können. Es ist ebenfalls erfindungsgemäß bevorzugt, mehrere der in den Figuren 1 und 2 dargestellten Ausgangskomponenten über weitere anzuordnende Segmente miteinander zu verbinden. Daraus folgt, dass durch das einfache Schneiden der Segmente und Trägerbänder nicht nur zwei, sondern eine größere Anzahl von Bimetallbändern erzeugt werden kann.

Basierend auf der erfindungsgemäßen Konstruktion der Ausgangskomponenten wird eine kompakte Anordnung bereitgestellt, die sowohl die Lagerung als auch die Lieferung dieser Ausgangskomponenten gemessen an der Zahl der herstellbaren Sägeblätter vereinfacht. Zudem sind wenige Arbeitsschritte zur Herstellung der erfindungsgemäßen Ausgangskomponente im Vergleich zur Herstellung der gleichen Anzahl an Bimetallblättern erforderlich. Dies führt zu geringeren Kosten und zu Zeiteinsparungen bei der Herstellung sowohl der erfindungsgemäßen Ausgangskomponente als auch der späteren Sägeblätter bzw. Sägebänder.

Im Folgenden wird das erfindungsgemäß bevorzugte Verfahren zur Herstellung der oben genannten Ausgangskomponenten und zur Herstellung von Sägeblättern bzw. Sägebändern beschrieben. Die einzelnen bevorzugten Verfahrensschritte, aus denen sich das Gesamtverfahren aufbaut, können beliebig in Unterverfahren zusammengefasst werden, die durch Zulieferer und Endhersteller von Sägeblättern ausgeführt werden. Somit werden alle Verfahrensschritte, die hier zusammenhängend beschrieben sind, als Schritte zur Herstellung der Ausgangskomponente oder als Schritte zur Herstellung des Sägeblatts angesehen.

In Figur 1 ist eine bevorzugte Ausgangskomponente gezeigt, die aus dem ersten Trägerband 10 und dem zweiten Trägerband 20 aufgebaut ist. Die Trägerbänder 10, 20 umfassen jeweils eine erste und eine zweite Stirnseite, wobei die erste Stirnseite bevorzugt schmaler ist als die zweite Stirnseite. In der Ausgangskomponente, die schematisch in Figur 1 gezeigt ist, sind die ersten Stirnseiten der Trägerbänder 10, 20 gegenüberliegend angeordnet und über das dazwischen liegende durchgehende Segment 30 miteinander verbunden. Wie bereits oben erwähnt worden ist, wird die bevorzugte Ausgangskomponente mit weniger Arbeitsschritten hergestellt, als eine vergleichbare Anzahl an Bimetallbändern. Neben der vereinfachten Herstellung zeichnet sich die Ausgangskomponente durch bessere Lagermöglichkeiten aus und sie lässt sich mit geringerem Aufwand transportieren.

Ausgehend von der in Figur 1 gezeigten bevorzugten Ausführungsform der Ausgangskomponente wird durch annähernd gradliniges Trennen bzw. Schneiden des durchgehenden Segments 30 die Ausgangskomponente in zwei Bimetallbänder geteilt. Das Schneiden innerhalb des durchgehenden Segments 30 erfolgt bevorzugt derart, das an beiden Trägerbändern 10, 20 ein Teil des Segments 30 stehen bleibt. Zur weiteren Verarbeitung wird dann bevorzugt eine Schneidkontur in die erzeugten Bimetallbänder gefräst. In dieser Schneidkontur werden die Zahnspitzen durch die Reste des Segments 30 gebildet. Nach dem Erzeugen der Zahnkontur erfolgt bevorzugt ein Härten des Sägeblattvorkörpers, das abschließend, sofern es erforderlich sein sollte, durch Schleifen nachgearbeitet oder auf genauere Abmessungen gearbeitet wird.

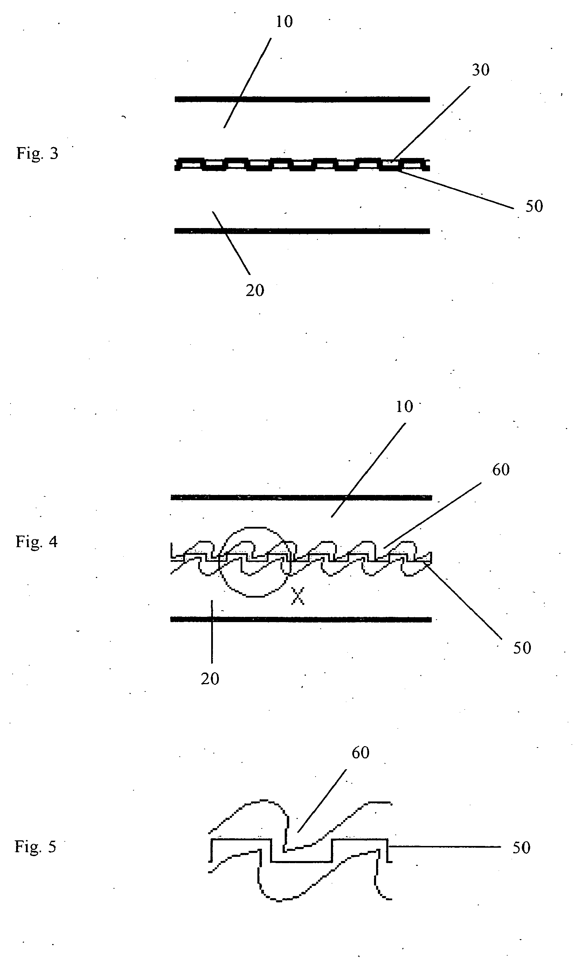

Gemäß einer weiteren bevorzugten Ausführungsform der vorliegenden Erfindung wird die in Figur 1 dargestellte Ausgangskomponente entlang der Schneidlinie 50 geschnitten, wie sie in Figur 3 schematisch gezeigt ist. Die Schneidlinie 50 verläuft bevorzugt innerhalb des durchgehenden Segments 30. Es ist ebenfalls bevorzugt, dass die Schneidlinie 50 teilweise in den Trägerbändern 10, 20 verläuft, sofern dies die weitere Fertigung des Sägeblattes unterstützt. Basierend auf dem Verlauf der Schneidlinie 50 ergeben sich zwei Bimetallblätter bzw. Bimetallbänder mit versetzt angeordneten Segmenten 30. Aufgrund ihrer Form gibt die Schneidlinie 50 in groben Zügen die spätere Schneidkontur des herzustellenden Sägeblatts vor. Dieser Zusammenhang zwischen der Form der Schneidlinie 50 und der späteren Schneidkontur des herzustellenden Sägeblatts ist schematisch in den Figuren 4 und 5 dargestellt. Dabei zeigt die Figur 5 eine vergrößerte Darstellung des in Figur 4 eingekreisten Bereiches.

Da die spätere Kontur des Sägeblattes durch den Verlauf der Schneidlinie 50 annähernd nachempfunden wird, wird dieser Vorgang auch als konturnahes Schneiden bezeichnet. Durch die Genauigkeit des konturnahen Schneidens können weitere Bearbeitungsschritte, wie beispielsweise Fräsen oder Schleifen, auf ein Minimum reduziert oder sogar eingespart werden.

Bevorzugt erfolgt nach dem Schneiden oder dem konturnahen Schneiden ein Härten der Verbindung aus Trägerband und Segment. Da das Schneiden oder konturnahe Schneiden unter dem Einfluss von Wärme durchgeführt wird, beispielsweise mit Hilfe von Lasern, bleiben in den geschnittenen Werkstoffen mechanische Spannungen, Gefügeveränderungen und/oder Glasphasen und dergleichen zurück. Diese zumeist negativen Effekte relaxieren während des Härtens.

Neben dem weitgehenden Beseitigen der oben genannten negativen Effekte bildet das Härten die Grundlage für das spätere Schleifen der erzeugten Bimetallbänder. Ohne den Härtungsprozess würde das Schleifen durch die zu weichen Werkstoffe behindert werden, weil beispielsweise die Schleifwerkzeuge verschmieren. Zudem unterstützt das konturnahe Schneiden in Kombination mit dem Härten das spätere Schleifen, weil aufgrund der Genauigkeit des konturnahen Schneidens nur noch geringe Mengen an Material abgetragen werden müssen. Auf dieser Basis wird bevorzugt ein Fräsen der Ausgangskomponente eingespart.

Gemäß einer weiteren bevorzugten Ausführungsform der erfindungsgemäßen Ausgangskomponente, die in Figur 2 schematisch dargestellt ist, sind ein erstes Trägerband 10 und ein zweites Trägerband 20 über eine Mehrzahl von Segmenten 40 miteinander verbunden. Wie bereits das oben beschriebene durchgehende Segment 30 sind auch die Segmente 40 aus einem geeigneten Schneidwerkstoff hergestellt.

Die Segmente 40 sind regelmäßig, periodisch und/oder unregelmäßig entlang der Längsrichtung der Trägerbänder 10, 20 angeordnet, um beispielsweise in einem späteren Sägevorgang Schwingungen zu reduzieren oder sogar ganz zu verhindern. Der Abstand der mehreren Segmente 40 ist zudem auf die später zu erzeugende Zahnkontur 60, 70 (vgl. Figuren 4, 5, 6 und 7) angepasst. Der Zusammenhang zwischen dem Abstand der Segmente 40 und der späteren Schneidkontur 60, 70 basiert bevorzugt darauf, dass die Segmente 40 nach der Bearbeitung die Spitzenbereiche der Zähne des hergestellten Sägeblatts bilden.

Aufgrund der bevorzugten Anordnung der Segmente 40 in den Bereichen, in denen später Zahnkonturen erzeugt werden, und dem Weglassen von kostenintensivem Schneidwerkstoff in den Zwischenbereichen, wo später keine Zahnkontur erzeugt wird, führt zu einer effektiven Materialeinsparung, Ausnutzung des vorhandenen Materials und somit zu einer kostengünstigeren Herstellung von Sägeblättern.

Gemäß einer weiteren bevorzugten Ausführungsform der vorliegenden Erfindung wird die Ausgangskomponente gemäß Figur 2 derart getrennt, dass an den gegenüberliegenden Stirnseiten der Trägerbänder 10, 20 Abschnitte der Segmente zurückbleiben. Um die abschließende Schneidkontur des Sägeblattes zu erzielen, erfolgt ein Fräsen und/oder Schleifen und abschließendes Härten oder es erfolgt ein Fräsen und/oder Härten und ein abschließendes Schleifen.

Gemäß einer weiteren bevorzugten Ausführungsform der vorliegenden Erfindung wird die in Figur 2 dargestellte Ausgangskomponente bestehend aus den Trägerbändern 10, 20 und den verbindenden Segmenten 40 gehärtet. Da die Segmente 40 über verhältnismäßig kurze Abschnitte mit den Trägerbändern 10, 20 verbunden sind, entsteht durch die Wärmebehandlung während des Härtens nur ein verhältnismäßig geringer Verzug der erfindungsgemäßen Ausgangskomponente. Dieser Verzug basiert auf dem unterschiedlichen Dehnungsverhalten der Materialien, die für die Trägerbänder 10, 20 und die Segmente 40 verwendet werden. Aufgrund des geringeren Verzugs wird die Anpassung der Werkstoffe von Trägerband und Segment aneinander erleichtert, um den verbleibenden Verzug auszugleichen. Des Weiteren bildet der reduzierte oder fast vollständig aufgehobene Verzug einen besseren Ausgangspunkt für die weitere Bearbeitung der Ausgangskomponente. Als einen weiteren Vorteil bildet der Härteprozess die Grundlage für ein nachfolgendes Schleifen, da das Schleifen von gehärtetem Material im Vergleich zu nicht gehärtetem Material mit reduzierter Werkzeugbelastung erfolgt. Dies ist auf den Umstand zurückzuführen, dass das gehärtete Material beispielsweise nicht zu einem "Schmieren" auf den Schleifwerkzeugen führt.

Weiterhin basierend auf der Anordnung der Mehrzahl von Segmenten 40 zwischen den Trägerbändern 10, 20 wird eine Ausgangskomponente bereitgestellt, die mit einem konturnahe geschnittenen doppelten Bimetallstreifen vergleichbar ist. Daraus folgt, dass bevorzugt nur noch ein geringer Materialabtrag erforderlich ist, um die abschließende Form des Sägeblattes zu erzielen. Dies spart bevorzugt den Schritt des Fräsens und unterstützt zudem in Zusammenhang mit dem Härteprozess eine sofortige genaue Fertigung der Sägekontur mit Hilfe des Schleifens. Daraus folgt, dass aufgrund der oben beschriebenen Herstellung der Ausgangskomponente Arbeitsschritte und somit Kosten bei der Herstellung von Sägeblättern bzw. Sägebändern eingespart werden.

Zur weiteren Verarbeitung der bevorzugt gehärteten Ausgangskomponente erfolgt ein Trennen der Segmente 40, so dass an den gegenüberliegenden Stirnseiten der Trägerbänder 10, 20 gegenüberliegende Abschnitte des jeweils geschnittenen Segments 40 zurückbleiben. Die auf diese Weise erzeugten gehärteten Bimetallbänder bzw. Bimetallstreifen werden durch Schleifen, Stanzen oder andere bevorzugte Gestaltungsvorgänge in die Form der abschließenden Schneidkontur gebracht.

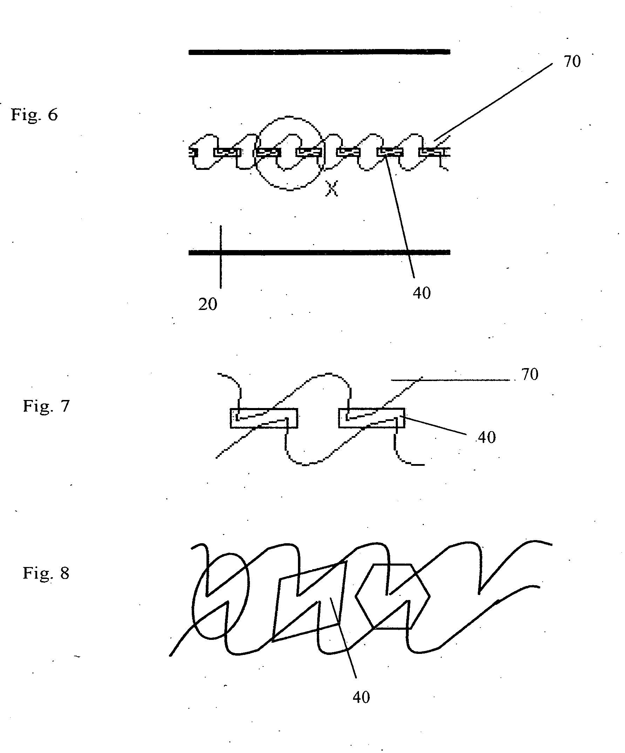

Gemäß einer weiteren bevorzugten Ausführungsform der vorliegenden Erfindung wird die in Figur 2 dargestellte Ausgangskomponente nach dem Härten mit Hilfe eines konturnahen Schneidvorgangs innerhalb der Segmente 40 getrennt. Das konturnahe Schneiden kann sich bevorzugt auch über die Segmente 40 hinaus bis in die Trägerbänder 10, 20 erstrecken. Dieses konturnahe Schneiden führt zu den Zahnkonturen 70, wie sie beispielhaft in den Figuren 6 und 7 dargestellt sind. Diese bevorzugte Gestaltung des Herstellungsverfahrens führt zu einer optimalen Materialausnutzung, so dass der Verlust an teuerem Schneidwerkstoff reduziert wird und auf diese Weise Kosten gespart werden. Zudem führt das konturnahe Schneiden zu einer Zahnkontur, die nur noch einer geringen Nachbearbeitung bedarf, um die abschließenden Geometrien des zu erzeugenden Sägeblattes zu erzielen. Da die hier verarbeitete Ausgangskomponente bereits gehärtet ist, erfolgt diese Nachbearbeitung mit Hilfe von Schleifvorgängen, die ebenfalls mit geringen Werkzeugbelastungen und somit auch mit geringen Kosten verbunden sind.

Um des Weiteren das für die Segmente 40 verwendete Material optimal auszunutzen und auf diese Weise Kosten zu sparen, werden bevorzugt die Schneidkonturen von zwei späteren Zahnspitzen in einem Segment 40 angeordnet. Dies ist gemäß einer bevorzugten Ausführungsform in den Figuren 6 und 7 gezeigt. Gemäß dieser Ausführungsform werden die abgerundeten Zahnkontur-Bereiche nahe beieinander positioniert, während die geradlinig verlaufenden Bereiche - hier bevorzugt annähernd senkrecht verlaufend - nahe der Außenkante des Segments 40 angeordnet sind. Zudem wird die Größe des Segments 40 an die angestrebte Zahnkontur derart angepasst, so dass möglichst wenig Material als Überschuss abgetragen werden muss. Weiterhin werden die Zahnkonturen bevorzugt derart im Segment angeordnet, dass sich die oben genannten geradlinigen Bereiche gegenüber liegen. Dies führt gerade bei einer relativ schmalen, spitz nach oben ragenden Zahnkontur zu Materialeinsparungen.

Die Menge des überschüssigen Materials oder das Aufmaß, das beim konturnahen Schneiden der Segmente eingeplant werden muss, ist mit der Wärmebelastung während des Schneidens verknüpft. Dies folgt aus den wärmebelasteten oder wärmegeschädigten Zonen, die beim Schneiden entstehen können. Daher ist es ebenfalls erfindungsgemäß bevorzugt, die Wärmebelastung beim Schneiden oder allgemein beim Bearbeiten derart zu wählen, dass die wärmebelasteten Zonen klein gehalten werden und dadurch das Aufinaß vermindern.

Gemäß einer weiteren bevorzugten Ausführungsform der vorliegenden Erfindung wird neben dem Material der Segmente 30, 40 ebenfalls die Form der Segmente variiert, wenn man sie, so wie in den Figuren 1 und 2 dargestellt, von der Seite betrachtet. Diese Formvariation hat bevorzugt das Ziel, eine beispielsweise nicht nur geradlinig verlaufende Grenzfläche zwischen Segment und Trägerband zu erzeugen. Diese Grenzfläche zwischen Trägerband und Segment wird während eines späteren Sägevorgangs durch starke mechanische Spannungen belastet. Durch den bevorzugten Verlauf dieser Grenzfläche erfolgt ein gegenseitiges Abstützen zwischen Segment und verbundenem Trägerband. Zu diesem Zweck ist es bevorzugt, Segmente 40 in einer krummlinigen oder eckigen Form, beispielsweise in einer runden, ovalen, gleichmäßig mehreckigen oder viereckigen Form, zu verwenden. Beispielgebende Formen sind in Figur 8 schematisch dargestellt und veranschaulichen das Prinzip, dass hier ausgenutzt werden soll.

Die verschiedenen Formen der Segmente 40 werden bevorzugt in komplementär zu diesen Segmenten 40 geformte Aussparungen in dem jeweiligen Trägerband 10, 20 eingesetzt. Aufgrund dieser Anordnung verläuft die Grenzfläche zwischen Segment und Trägerband krummlinig, geradlinig, eckig oder in jeder beliebigen Form, die die Stabilität des späteren Sägeblatts bestehend aus Trägerband und Segment unterstützt. Bevorzugt werden die verschiedenen Formen der Segmente 40 durch Schweißen, Löten oder andere geeignete Befestigungs- oder Verbindungsverfahren in den jeweiligen Aussparungen der Trägerbänder angebracht.

Gemäß einer weiteren bevorzugten Ausführungsform der vorliegenden Erfindung weisen die Segmente 30, 40 in ihrem Querschnitt eine profilierte Form auf. Die hier betrachtete Querschnittsfläche verläuft senkrecht sowohl zu der Darstellungsebene der Figuren 1 und 2 als auch zu den dort erkennbaren Längsachsen der Trägerbänder 10, 20. Die Querschnittsfläche weist bevorzugt die Form eines Parallelogramms, Trapezes, unregelmäßigen Vierecks oder dergleichen auf. Die Profilierung des Querschnitts der Segmente 30, 40 findet vorzugsweise Anwendung bei Schneidwerkstoffen, die zum Verschränken von Zahnkonturen der späteren Sägeblätter nicht gebogen werden können. Erfindungsgemäß bevorzugt liefert der profilierte Querschnitt der verwendeten Segmente bereits selbst eine verschränkungsähnliche Anordnung. Es ist weiterhin bevorzugt, diese verschränkungsähnliche Anordnung mit Hilfe von Bearbeitungsverfahren, wie beispielsweise Schleifen, herauszuarbeiten. Auf dieser Basis ist es erfindungsgemäß bevorzugt möglich, auch bei der Nutzung von beispielsweise keramischen Schneidwerkstoffen, Hartmetall, PKD oder dergleichen eine Zahnkontur zu erzielen, die ähnliche Eigenschaften aufweist, wie sie mit einer Verschränkung bei herkömmlichen Sägeblättern erzielt werden würde.

## Patentansprüche

1. Eine Ausgangskomponente zur Herstellung von Sägeblättern bzw. Sägebändern aufweisend:
a. mindestens ein erstes und ein zweites Trägerband, vorzugsweise ein Stahlband; und
b. mindestens ein Segment bestehend aus einem Ausgangswerkstoff für eine Schneidkontur von Sägeblättern bzw. Sägebändern, wobei
c. das erste und das zweite Trägerband über das mindestens eine Segment miteinander verbunden sind, um durch Trennen von zumindest des mindestens einen Segments zwei Bimetallbänder zu erzeugen.

2. Die Ausgangskomponente gemäß Anspruch 1, wobei das mindestens eine Segment aus Schnellarbeitsstahldraht (HSS-Draht), Schnellarbeitskantendraht, Schnellarbeitsstahlblech, Keramik, Cermets, Hartmetall, PKD und/oder geeigneten Schneidwerkstoffen besteht.

3. Die Ausgangskomponente gemäß Anspruch 2, wobei die Breite des Schnellarbeitsstahldrahts zwischen der Standardbreite und der doppelten Standardbreite variiert.

4. Die Ausgangskomponente gemäß einem der vorhergehenden Ansprüche, wobei sich das mindestens eine Segment über die gesamte Länge des ersten und zweiten Trägerbandes erstreckt oder wobei eine Mehrzahl von Segmenten in regelmäßigen oder periodischen Abständen entlang des ersten und zweiten Trägerbandes angeordnet sind.

5. Die Ausgangskomponente gemäß Anspruch 4, wobei die Ausgangskomponente mit der Mehrzahl an Segmenten gehärtet ist.

6. Die Ausgangskomponente gemäß einem der vorhergehenden Ansprüche, wobei das erste und das zweite Trägerband jeweils eine erste und eine zweite Stirnseite aufweisen und die erste Stirnseite schmaler ist als die zweite Stirnseite, wobei die ersten Stirnseiten über das mindestens eine Segment miteinander verbunden sind.

7. Die Ausgangskomponente gemäß Anspruch 6, wobei das mindestens eine Segment eine krummlinige und/oder eckige Form aufweist, vorzugsweise rund, viereckig oder oval.

8. Die Ausgangskomponente gemäß Anspruch 7, wobei das mindestens eine Segment an der jeweils annähernd geraden ersten Stirnseite des ersten und zweiten Trägerbandes befestigt ist.

9. Die Ausgangskomponente gemäß Anspruch 7, wobei das mindestens eine Segment in einer Aussparung in der ersten Stirnseite des ersten und/oder zweiten Trägerbandes befestigt ist, wobei die Aussparung komplementär zu einem Abschnitt des jeweiligen Segments geformt ist.

10. Die Ausgangskomponente gemäß einem der vorhergehenden Ansprüche, wobei das mindestens eine Segment eine profilierte Querschnittsfläche senkrecht zur Längsachse des ersten und zweiten Trägerbandes aufweist.

11. Ein Verfahren zum Herstellen einer Ausgangskomponente zur Herstellung von Sägeblättern bzw. Sägebändern die folgenden Schritte aufweisend:
a. Bereitstellen mindestens eines ersten und eines zweiten Trägerbands, vorzugsweise Stahlbänder;
b. Bereitstellen mindestens eines Segments bestehend aus einem Ausgangswerkstoff für eine Schneidkontur von Sägeblättern bzw. Sägebändern, und
c. Verbinden des ersten und zweiten Trägerbands über das mindestens eine Segment.

12. Verfahren gemäß Anspruch 11, wobei das Verbinden durch Schweißen erfolgt.

13. Verfahren gemäß Anspruch 12, wobei das Verbinden durch Elektronenstrahl- oder durch Laserschweißen erfolgt.

14. Verfahren gemäß Anspruch 11, wobei das Verbinden durch Löten erfolgt.

15. Verfahren gemäß Anspruch 11, weiterhin aufweisend Vereinzeln einer Mehrzahl von Segmenten aus einem verschleißfesten Ausgangsmaterial.

16. Verfahren gemäß Anspruch 15, wobei das Vereinzeln durch Stanzen erfolgt.

17. Verfahren gemäß Anspruch 15, wobei das Ausgangsmaterial aus einem Schnellarbeitsstahldraht (HSS-Draht), Schnellarbeitskantendraht, Schnellarbeitsstahlblech, Keramik, Cermets, Hartmetall, PKD und/oder geeigneten Schneidwerkstoffen besteht.

18. Verfahren gemäß einem der vorhergehenden Ansprüche 11 bis 17, weiterhin aufweisend Wärmebehandeln des ersten und zweiten Trägerbandes und des mindestens einen Segments.

19. Verfahren gemäß einem der vorhergehenden Ansprüche 11 bis 18, weiterhin aufweisend Formrichten des ersten und zweiten Trägerbandes und des mindestens einen Segments.

20. Verfahren gemäß einem der Ansprüche 11 bis 19, weiterhin aufweisend Weichglühen und/oder Dressieren des ersten und zweiten Trägerbandes und des mindestens einen Segments.

21. Verfahren gemäß einem der vorhergehenden Ansprüche 11 bis 20, weiterhin aufweisend Härten des ersten und zweiten Trägerbandes und des mindestens einen Segments.

22. Verfahren gemäß Anspruch 21, weiterhin aufweisend Schneiden der Ausgangskomponente, um mindestens zwei Sägeblatt- bzw. Sägebandvorkörper zu erhalten.

23. Verfahren gemäß Anspruch 22, wobei das Schneiden ein konturnahes Schneiden ist.

24. Verfahren gemäß Anspruch 23, wobei das konturnahe Schneiden der Ausgangskomponente vor dem Härten der Ausgangskomponente erfolgt.

25. Ein Verfahren zum Herstellen eines Sägeblatts bzw. Sägebands aus einer Ausgangskomponente umfassend ein erstes und ein zweites Trägerband und mindestens ein verbindendes Segment bestehend aus einem Ausgangswerkstoff für eine Schneidkontur, den folgenden Schritt aufweisend:
Schneiden der Ausgangskomponente, vorzugsweise mit einem Schneidlaser, derart, dass zwei Vorkörper für Sägeblätter bzw. Sägebänder entstehen.

26. Verfahren gemäß Anspruch 25, wobei das Schneiden derart erfolgt, dass nach dem Schneiden an den gegenüberliegenden Seiten des ersten und zweiten Trägerbandes jeweils ein Teil des Segments stehen bleibt.

27. Verfahren gemäß Anspruch 25, wobei ein konturnahes Schneiden erfolgt.

28. Verfahren gemäß Anspruch 25, wobei das Schneiden derart erfolgt, dass eine Kontur in die Ausgangskomponente geschnitten wird.

29. Verfahren gemäß Anspruch 28, wobei die Kontur mit einem Aufmaß zur Fertigbearbeitung geschnitten wird.

30. Verfahren gemäß Anspruch 27 bis 29, weiterhin aufweisend Anordnen des Schnitts der Kontur derart, dass das erste und das zweite Trennband mit mindestens einem verbindendem Segment sich annähernd gegenüberliegende Zahnkonturen oder seitlich versetzte Zahnkonturen aufweist.

31. Verfahren gemäß einem der Ansprüche 27 bis 30, wobei die Kontur in das mindestens eine Segment oder in das mindestens eine Segment und das erste und/oder zweite Trägerband geschnitten wird.

32. Verfahren gemäß einem der Ansprüche 27 bis 31, weiterhin aufweisend ein Verschachteln der Zahnkonturen jeweils innerhalb eines Segments, um das jeweilige Segment annähernd vollständig mit den Zahnkonturen auszunutzen.

33. Verfahren gemäß einem der Ansprüche 25 bis 31, weiterhin aufweisend Härten der Ausgangskomponente vor oder nach dem Schneiden.

34. Verfahren gemäß einem der vorhergehenden Ansprüche 25 bis 32, weiterhin aufweisend Schleifen einer Kontur eines Sägeblatts bzw. eines Sägebands.

35. Verfahren gemäß einem der Ansprüche 25 bis 33, weiterhin aufweisend Trennen des ersten und oder zweiten Trägerbandes in Längsrichtung, um mindestens zwei Ausgangskomponenten oder mindestens zwei Vorkörper für Sägeblätter bzw. Sägebänder zu erzeugen.
